# EUROPÄISCHE PATENTSCHRIFT

(11) **EP 3 190 026 B1**
(45) Veröffentlichungstag und Bekanntmachung des Hinweises auf die Patenterteilung: **27.12.2017**
(21) Anmeldenummer: 16150201.8
(22) Anmeldetag: 05.01.2016
(51) Int. Cl.: B62B 1/12, B62B 3/02

(54) **ZUSAMMENFALTBARER TRANSPORTWAGEN**
COLLAPSIBLE TRANSPORT TROLLEY
CHARIOT DE TRANSPORT REPLIABLE

(43) Veröffentlichungstag der Anmeldung: 12.07.2017
(73) Patentinhaber: Kompernaß Handelsgesellschaft mbH, 44867 Bochum (DE)
(72) Erfinder: Yilmaz, Hakan, 45881 Gelsenkirchen (DE)
(74) Vertreter: Nunnenkamp, Jörg

(56) Entgegenhaltungen:
- WO-A1-2015/006760
- US-A- 3 785 669
- US-A1- 2010 117 336

## Beschreibung

Die Erfindung betrifft einen zusammenfaltbaren Transportwagen, mit einer Basis, ferner mit zumindest einem an die Basis angeschlossenen Räderpaar, welches mit an die Basis an- und hiervon abklappbaren Rädern ausgerüstet ist, und mit einer Handhabe, welche wenigstens in eine an die Basis angeklappte Vorratsstellung, in eine winklig zur Basis angeordnete Transportstellung und in eine in Richtung der Basis ausgestreckte Sackkarrenstellung überführbar ist.

Ein zusammenfaltbarer Transportwagen des eingangs beschriebenen Aufbaues wird im Großen und Ganzen in der US 3 785 669 beschrieben. Hier fallen die Vorratsstellung mit der an die Basis angeklappten Handhabe und auch die Sackkarrenstellung im Wesentlichen ineinander. In der Transportstellung ist die Handhabe senkrecht zur Basis angeordnet. Dadurch kann der bekannte Transportwagen in dieser Transportstellung genutzt werden, um beispielsweise schwere Güter mit dem Transportwagen zu transportieren.

Die Handhabe fungiert in diesem Fall zugleich als Transportbügel, um den solchermaßen realisierten Transportwagen bewegen zu können. Die Basis verfügt über ein Räderpaar mit luftbereiften Rädern an einem Ende und ein weiteres Räderpaar mit um eine senkrechte Achse drehbaren Rädern am anderen Ende der Basis. Dadurch kann der Transportwagen unschwer Kurven beschreiben. Das hat sich grundsätzlich bewährt.

Bei einem gattungsgemäßen zusammenfaltbaren Transportwagen entsprechend der WO 2015/006760 A1 wird so vorgegangen, dass die Basis erneut mit zwei Räderpaaren ausgerüstet ist. Dabei ist ein Räderpaar mit um eine vertikale Achse drehbaren Rollen ausgerüstet, um die erforderliche Lenkbarkeit zur Verfügung zu stellen. Das andere zweite Räderpaar besitzt Räder, die an die Basis an- und hiervon abgeklappt werden können. Zu diesem Zweck lassen sich die fraglichen Räder des Räderpaares um eine Längsachse der Basis verschwenken. Die Verschwenkbewegung der Räder erfolgt mit Hilfe der Handhabe über eine zwischengeschaltete Druckstange. Dadurch kann der bekannte zusammenklappbare Transportwagen mit Hilfe der Handhabe allein vom zusammengefalteten Zustand in die Transportstellung und auch in die Sackkarrenstellung überführt werden. Denn bei diesem Vorgang werden zugleich die in der Transportstellung an die Basis angeklappten Räder abgeklappt.

Die US 2010/117336 A1 befasst sich mit einer zusammenfaltbaren Rahmenbaueinheit. Diese kann auch zu Transportzwecken genutzt werden. Für das Zusammenfalten eines an- und abklappbaren Räderpaares ist ein Schloss vorgesehen, welches über eine Handhabe ausgelöst wird. Eine Stiftanordnung sorgt dann für das gewünschte An- und Abklappen der Räder.

Der bekannte Transportwagen nach der WO 2015/006760 A1 verfügt zwar über eine einfache Bedienung, weil hierfür letztlich die Handhabe alleine sorgt. Allerdings können in der Praxis Probleme auftreten. So ist der Kraftaufwand zum gleichzeitigen Abklappen der Handhabe wie der Räder signifikant. Hinzukommt, dass die Handhabe über eine relativ komplizierte Mechanik auf die an- und abklappbaren Räder arbeitet. Wird der bekannte Transportwagen in der Praxis unter Berücksichtigung rauer Umweltbedingungen eingesetzt, so sind Verschmutzungen der Mechanik, Korrosionen und steigender Verschleiß etc. zu befürchten. Dies alles erhöht die Bedienkräfte und beeinträchtigt die Funktionssicherheit. Das kann so weit gehen, dass der bekannte Transportwagen nicht mehr bestimmungsgemäß genutzt werden kann. Hier will die Erfindung insgesamt Abhilfe schaffen.

Der Erfindung liegt die technische Problemstellung zugrunde, einen derartigen zusammenfaltbaren Transportwagen so weiter zu entwickeln, dass die Bedienung auf langen Zeitskalen gewährleistet ist und verschleiß- oder verschmutzungsbedingte Ausfälle nicht befürchtet werden müssen.

Zur Lösung dieser technischen Problemstellung ist ein gattungsgemäßer zusammenfaltbarer Transportwagen im Rahmen der Erfindung dadurch gekennzeichnet, dass ein von der Handhabe funktional unabhängiges Betätigungselement zum An-/Abklappen der Räder vorgesehen ist, wobei das Betätigungselement an eine beide beabstandeten Längsrandstangen der Basis miteinander koppelnde Querstrebe angeschlossen ist, und wobei die Querstrebe als das Betätigungselement bis auf einen Betätigungsknopf oberseitig abdeckender Transportquerträger ausgebildet ist.

Im Rahmen der Erfindung erfolgt die Einnahme der verschiedenen Stellungen, also der Vorratsstellung, der Transportstellung und der Sackkarrenstellung im Gegensatz zum gattungsbildenden Stand der Technik nach der WO 2015/006760 A1 nicht durch eine Beaufschlagung der Handhabe allein. Vielmehr ist zur Darstellung der verschiedenen Stellungen einerseits die Handhabe zu beaufschlagen und andererseits das von der Handhabe funktional unabhängige Betätigungselement. Wegen der funktionalen Unabhängigkeit des Betätigungselementes von der Handhabe sind beide vorgenannten Elemente auch örtlich voneinander getrennt und können getrennt voneinander betätigt oder nicht betätigt werden.

So sorgt die Handhabe im Rahmen der Erfindung dafür, dass der Transportwagen die beiden grundsätzlich unterschiedlichen Stellungen, einerseits die Transportstellung und andererseits die Sackkarrenstellung einnehmen kann. In der Transportstellung ist die Handhabe winklig, regelmäßig rechtwinklig zur Basis angeordnet. Dadurch kann die Handhabe zugleich als Transportbügel dienen und dafür sorgen, dass auf der Basis abgelegte Waren mit dem Transportwagen bewegt werden können.

In der Sackkarrenstellung sorgt die Handhabe demgegenüber für eine Verlängerung der Basis und ist folglich nicht winklig im Vergleich zur Basis, sondern in ihrer Längsrichtung angeordnet. Dadurch kommt es gleichsam zur Verlängerung der Basis, so dass die Basis und die Handhabe zusammengenommen eine durchgängige Sackkarrenfläche definieren.

Der Schwenkbewegung der Handhabe folgt im Regelfall ein an die Handhabe angeschlossenes weiteres Räderpaar. Dieses Räderpaar verfügt über schwenkbare Lenkrollen. Tatsächlich sind die fraglichen Lenkrollen drehbar derart an die Handhabe angeschlossen, dass ihre jeweilige Drehachse in der Transportstellung des Transportwagens senkrecht zur Basis verläuft. Da die Basis in der Transportstellung überwiegend horizontal orientiert ist, kann der Transportwagen in dieser Transportstellung mit Hilfe der Lenkrollen gelenkt werden.

Demgegenüber ist mit Hilfe der an die Basis an- und hiervon abklappbaren Räder eine Lenkbewegung nicht möglich. Denn die fraglichen Räder werden um jeweils eine Längsachse der Basis verschwenkt. Tatsächlich hat es sich in diesem Zusammenhang bewährt, wenn die Räder mit jeweiligen Federelementen ausgerüstet sind. Die Federelemente sorgen dafür, dass die Räder eine Vorspannung in Richtung ihrer angeklappten Stellung erfahren.

Für den Wechsel der Räder von der an die Basis angeklappten Stellung in die abgeklappte Stellung ist es folglich erforderlich, die von den Federelementen aufgebaute Federspannung zu überwinden. Dies erfolgt seitens eines Bedieners manuell. Das Betätigungselement sorgt nun dafür, dass die fraglichen Räder in ihrer von der Basis abgeklappten Stellung gehalten werden. Hierzu blockiert das Betätigungselement die Räder in der abgeklappten Stellung zumindest temporär. Sollen die Räder wieder in ihre angeklappte Position im Vergleich zur Basis überführt werden, so ist es lediglich erforderlich, das Betätigungselement zu beaufschlagen.

Die Beaufschlagung des Betätigungselementes sorgt dafür, dass die Räder vom Betätigungselement freikommen und federunterstützt mit Hilfe der Federelemente in Anlage an die Basis angeklappt werden. Demgegenüber hält das Betätigungselement die fraglichen Räder in abgeklappter Position überwiegend durch Rastwirkung.

Um dies im Detail zu realisieren, ist das Betätigungselement im Allgemeinen mit zwei von einem Betätigungsknopf beaufschlagbaren Auslegern ausgerüstet. Die beiden Ausleger verfügen vorzugsweise über endseitige Rastmittel. Die Rastmittel an den Auslegern wechselwirken mit Gegenrastmitteln an den Rädern. Befindet sich das jeweilige Rad in seiner abgeklappten Stellung im Vergleich zur Basis, so können das zugehörige Rastmittel am Ausleger und das Gegenrastmittel am Rad ineinandergreifen, so dass das betreffende Rad gegen die Kraft des zugehörigen Federelementes in der abgeklappten Position im Vergleich zur Basis verbleibt. Das erfolgt solange, bis durch eine Beaufschlagung des Betätigungsknopfes der hiervon beaufschlagte Ausleger gleichsam zurückgezogen wird, so dass das Rastmittel am Ausleger und das Gegenrastmittel am Rad nicht (mehr) ineinandergreifen bzw. miteinander wechselwirken. Dadurch kommt das Rad frei und kann folglich das zugehörige Federelement das Rad in die angeklappte Stellung in Anlage an der Basis überführen.

Dazu ist das jeweilige Federelement typischerweise als Spiralfeder ausgebildet, welche mit ihren Windungen eine jeweilige Längsrandstange der Basis umgibt. Tatsächlich sind die fraglichen an- und abklappbaren Räder um jeweils eine Basislängsachse verschwenkbar ausgelegt. Dazu sind die Räder vorteilhaft an die jeweiligen Längsrandstangen der Basis drehbar angeschlossen.

Die Basis setzt sich also im Wesentlichen aus den beiden beabstandeten Längsrandstangen einerseits und einem oder mehreren Querstreben andererseits zusammen, welche die beiden beabstandeten Längsrandstangen miteinander mechanisch verbinden. Tatsächlich ist das Betätigungselement an eine die beiden beabstandeten Längsrandstangen der Basis miteinander koppelnde Querstrebe angeschlossen.

Bei der vorgenannten Querstrebe handelt es sich erfindungsgemäß um einen das Betätigungselement bis auf den Betätigungsknopf oberseitig abdeckenden Transportquerträger. Das heißt, der Transportquerträger verfügt in Aufsicht auf die Basis über eine überwiegend glatte Oberseite, um für einen einwandfreien Halt auf der Basis befindlicher Güter zu sorgen. Lediglich im Bereich des Betätigungsknopfes ist eine oberseitige Ausnehmung des Transportquerträgers vorgesehen. Denn der Betätigungsknopf ist in die fragliche oberseitige Ausnehmung des Transportquerträgers eingelassen.

Demgegenüber finden sich die übrigen Bestandteile des Betätigungselementes an der Unterseite des Transportquerträgers, werden folglich von dem Transportquerträger oberseitig abgedeckt. Dadurch sind diese Bestandteile des Betätigungselementes vor etwaigen Beschädigungen durch auf der Basis abgelegte Ladung geschützt. Das gilt namentlich für die beiden vom Betätigungsknopf beaufschlagbaren Ausleger ebenso wie für die Rastmittel an den Auslegern und die Gegenrastmittel an den Rädern. Jedenfalls wird das Betätigungselement optimal vor etwaigen Beschädigungen geschützt, weil es mit Hilfe des Transportquerträgers oberseitig abgedeckt wird. Hierdurch sind auch Fehlbeaufschlagungen des Betätigungsknopfes durch beispielsweise verrutschende Ladung auf der Basis ausgeschlossen.

Der genannte Transportquerträger ist darüber hinaus mit randseitigen Ausnehmungen für Drehlager der Räder ausgerüstet. Im Bereich der Ausnehmungen des Transportquerträgers finden sich auch die als Spiralfedern ausgelegten Federelemente der Räder, welche im Bereich der Ausnehmung jeweils die zugehörigen Längsrandstangen der Basis wendelförmig umgeben.

Die beiden Längsrandstangen sind an ihrem einen Ende durch eine schwenkbare Bodenplatte und an ihrem anderen Ende durch die Handhabe miteinander gekoppelt. Die fragliche Bodenplatte lässt sich um eine quer zur Basis verlaufende Achse in eine an- und abgeklappte Stellung überführen. In der abgeklappten Position fungiert die fragliche Bodenplatte in der Transportstellung des Transportwagens als seitlicher Anschlag an einem Ende der Basis ebenso wie die winklig hochstehende Handhabe am anderen Ende der Basis. Darüber hinaus sorgt die abgeklappte Bodenplatte in der Sackkarrenstellung für die nötige Abstützung der Ladung auf der Sackkarre.

Neben der fraglichen Bodenplatte sorgt zusätzlich der Transportquerträger dafür, dass die beiden Längsrandstangen miteinander verbunden werden. Dazu ist der Transportquerträger im Bereich der Bodenplatte angeordnet. Außerdem ist die Auslegung so getroffen, dass die Bodenplatte den Transportquerträger in zusammengefaltetem Zustand abdeckt. Dadurch ist sichergestellt, dass die Bodenplatte in angeklapptem Zustand an die Basis bzw. in zusammengefaltetem Zustand des Transportwagens nicht vorsteht, sondern vielmehr auf dem Transportquerträger aufliegt und diesen abdeckt.

Außerdem hat es sich hierbei bewährt, wenn die Bodenplatte mit Ausnehmungen ausgerüstet ist. Durch diese Ausnehmungen kann der Betätigungsknopf selbst in zusammengefaltetem Zustand des Transportwagens nach wie vor beaufschlagt werden. Das heißt, eine Bedienung der an die Basis an- und hiervon abklappbaren Räder ist sowohl in zusammengefaltetem Zustand des Transportwagens als auch in jeder anderen Funktionsstellung (Transportstellung oder Sackkarrenstellung) möglich und ausdrücklich zugelassen. Dadurch wird die Bedienung erleichtert.

Zusätzlich zu dem angesprochenen Transportquerträger ist zumindest noch ein Führungsquerträger für die Handhabe vorgesehen. Der Führungsquerträger für die Handhabe verbindet die beiden Längsrandstangen der Basis zusätzlich. Außerdem ist der Führungsquerträger mit einer Führungs- und Verriegelungseinrichtung für die Handhabe ausgerüstet. Auf diese Weise wird die Handhabe in zusammengefaltetem Zustand des Transportwagens mit Hilfe der Führungs- und Verriegelungseinrichtung festgelegt. Das gleiche gilt für die Transportstellung ebenso wie für die Sackkarrenstellung. Dadurch ist die Handhabe jeweils fest mit der Basis in der gewünschten Position gekoppelt und in dieser Position festgelegt, was die Funktionssicherheit ausdrücklich erhöht.

Im Ergebnis wird ein zusammenfaltbarer Transportwagen zur Verfügung gestellt, der sich zunächst einmal unschwer von seiner zusammengefalteten Position bzw. der Vorratsstellung sowohl in die Transportstellung als auch die hiervon abweichende Sackkarrenstellung überführen lässt. Dadurch kann mit Hilfe des erfindungsgemäßen Transportwagens sowohl ein herkömmlicher Transportwagen als auch eine Sackkarre realisiert werden. Die an dieser Stelle sonst üblichen zwei Gerätschaften werden also in dem einen zusammenfaltbaren erfindungsgemäßen Transportwagen zusammengefasst.

Der fragliche Transportwagen ist darüber hinaus funktionssicher gestaltet und lässt sich mit geringem Kraftaufwand bedienen. Hierzu trägt die unabhängige Beaufschlagung der Handhabe und der an die Basis an- und hiervon abklappbaren Räder wesentlich bei. Tatsächlich können die fraglichen Räder in prakttisch jeder Stellung des erfindungsgemäßen Transportwagens, d. h. sowohl in der Vorratsstellung als auch in der Transportstellung ebenso wie in der Sackkarrenstellung von ihrem an die Basis angeklappten Zustand in die abgeklappte Position und umgekehrt überführt werden. Hierfür sorgt jeweils das von der Handhabe funktional unabhängige Betätigungselement.

Da an dieser Stelle auf eine aufwändige Mechanik verzichtet wird, vielmehr ein Bediener die fraglichen Räder manuell gegen Federkraft abklappen kann, sind Funktionsstörungen auch nach langem Gebrauch und in verschmutzten Zustand nicht zu befürchten. Darüber hinaus werden die fraglichen Räder im abgeklappten Zustand im Vergleich zur Basis mit Hilfe des Betätigungselementes verrastet. Dadurch können die fraglichen Räder einwandfrei ihrer hauptsächlichen Tragfunktion nachkommen, ohne dass ein unbeabsichtigtes Anklappen befürchtet werden muss.

Hierzu trägt ergänzend der Umstand bei, dass der die betreffenden Räder beaufschlagende Betätigungsknopf ausdrücklich in eine oberseitige Ausnehmung des Transportquerträgers eingelassen ist. Dadurch sind unbeabsichtigte Betätigungen ausgeschlossen, und zwar auch durch auf der Basis aufliegende und hiermit transportierte Ware. Hinzukommt, dass der Betätigungsknopf typischerweise in Querrichtung der Basis beaufschlagt werden muss, um die Rastung zwischen dem vom Betätigungsknopf beaufschlagten zugehörigen Ausleger und dem jeweils abgeklappten Rad aufzuheben. Solche Querbewegungen lassen sich in Verbindung mit der versenkten Aufnahme des Betätigungsknopfes in der oberseitigen Ausnehmung des Transportquerträgers nur gezielt realisieren und können beispielsweise durch Ladung oder verrutschende Ladung nicht unbeabsichtigt hervorgerufen werden.

Schließlich überzeugt der erfindungsgemäß zusammenfaltbare Transportwagen durch ein Minimum an Funktionsbauteilen, weshalb sein Gewicht niedrig ist. Hierzu trägt ergänzend bei, dass die jeweiligen Querstreben, also der Transportquerträger und auch der Führungsquerträger jeweils als großflächige Kunststoffspritzgussteile ausgebildet sind. Einzig die schwenkbare Bodenplatte und auch die Handhabe sowie die beiden Längsrandstangen sind aus Metall gefertigt. Hier kommt typischerweise Aluminium zum Einsatz, so dass der fragliche Transportwagen über ein besonders geringes Gesamtgewicht verfügt und somit einfach bewegt und verstaut werden kann. Denn in der Vorratsstellung bzw. in seinem zusammengefalteten Zustand nimmt der erfindungsgemäße Transportwagen ein Minimum an Raum ein. Hierin sind die wesentlichen Vorteile zu sehen.

Im Folgenden wird die Erfindung anhand einer lediglich ein Ausführungsbeispiel darstellenden Zeichnung näher erläutert; es zeigen:
- Fig. 1: den erfindungsgemäßen zusammenfaltbaren Transportwagen in der Transportstellung,
- Fig. 2: den Transportwagen nach der Fig. 1 in der Sackkarrenstellung,
- Fig. 3: den Transportwagen nach den Fig. 1 und 2 in Vorratsstellung bzw. in zusammengefaltetem Zustand perspektivisch mit Blick auf die Transportgutseite,
- Fig. 4: den Gegenstand nach der Fig. 3 mit Blick auf die Rückseite,
- Fig. 5: den Transportwagen in der Sackkarrenstellung nach Fig. 2 im Ausschnitt sowie in Frontansicht und
- Fig. 6: den Gegenstand nach Fig. 5 in Rückansicht.

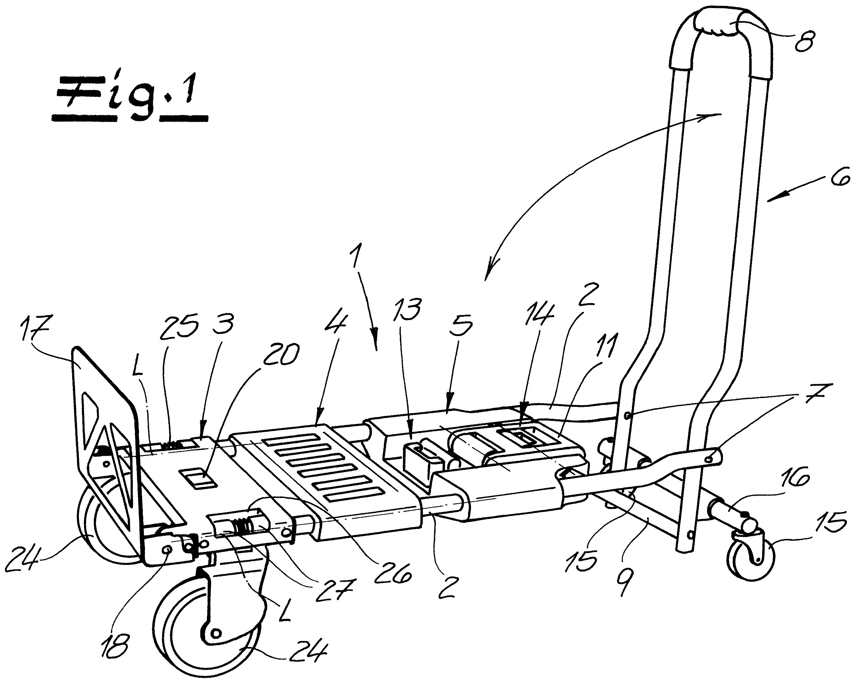

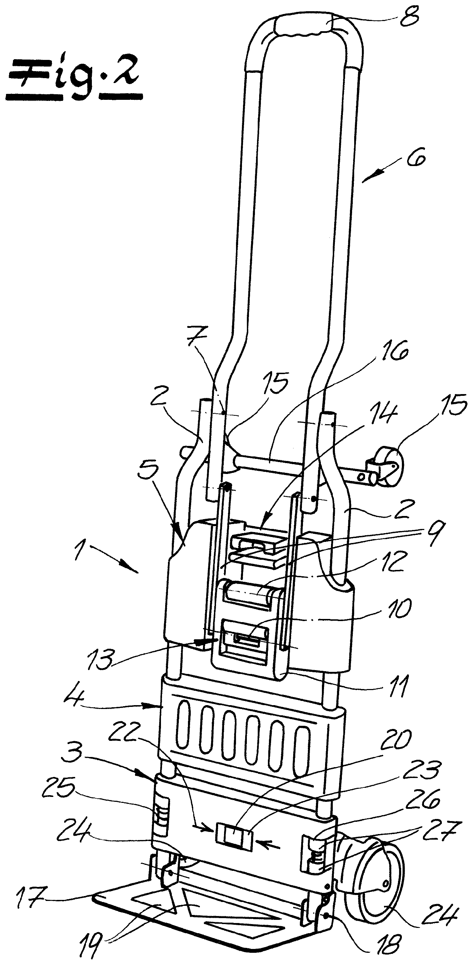

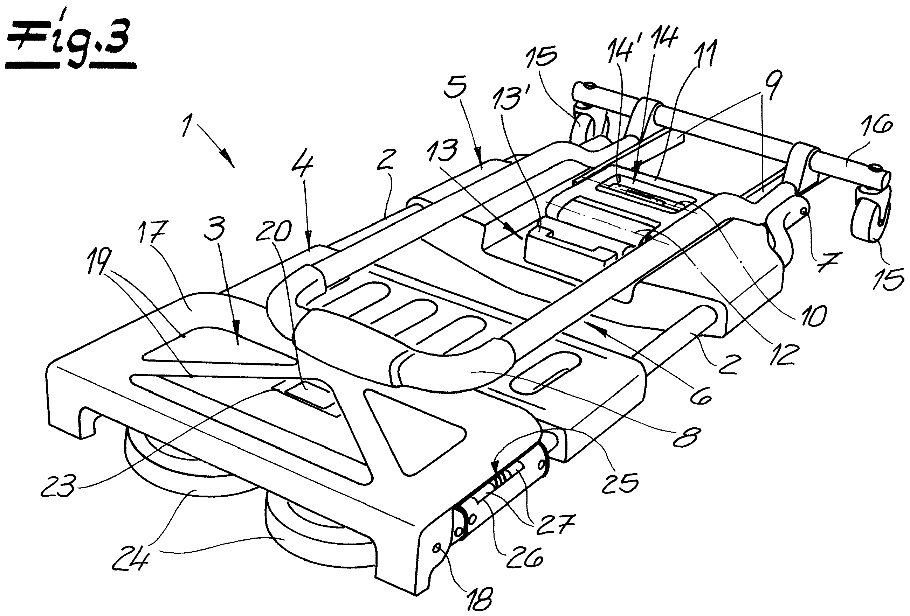

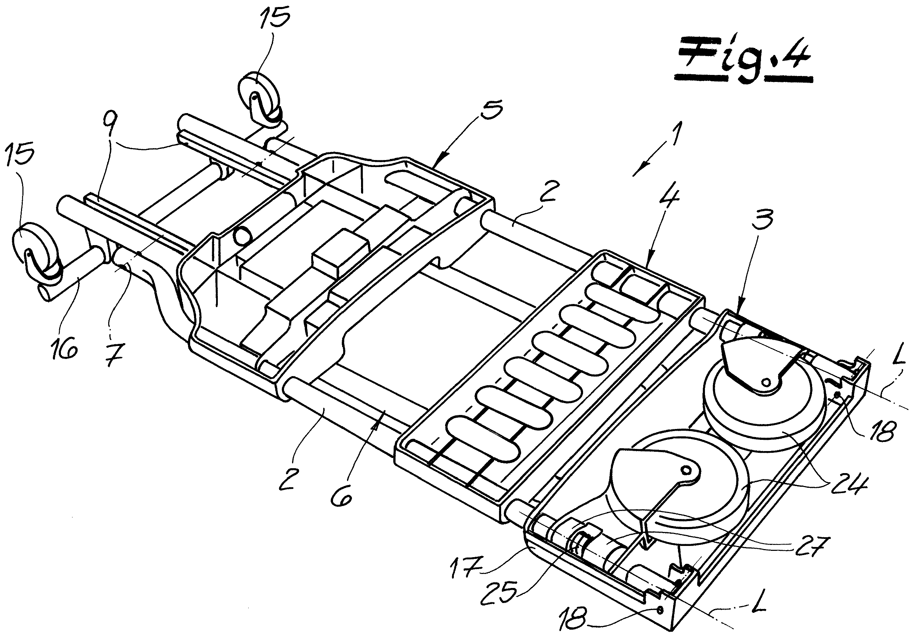

In den Figuren ist ein zusammenfaltbarer Transportwagen dargestellt. Der Transportwagen lässt sich von einer Vorratsstellung bzw. einer in den Fig. 3 und 4 dargestellten zusammengefalteten Position einerseits in die Transportstellung nach der Fig. 1 und andererseits in die Sackkarrenstellung entsprechend der Fig. 2 überführen.

Zu diesem Zweck verfügt der zusammenfaltbare Transportwagen zunächst einmal über eine Basis 1. Die Basis 1 setzt sich im Ausführungsbeispiel aus zwei Längsrandstangen 2 und die Längsrandstangen 2 miteinander verbindenden Querträgern 3, 4, 5 zusammen. Der Querträger 3 ist als Transportquerträger 3 ausgebildet. Bei dem Querträger 5 handelt es sich um einen Führungsquerträger 5. Der Querträger 4 ist schließlich als Zwischenraum-Querträger 4 ausgelegt.

Sämtliche Querträger 3, 4, 5 sind als großflächige Spritzgussteile aus Kunststoff gefertigt und übergreifen jeweils randseitig die Längsrandstangen 2. Bei den Längsrandstangen 2 handelt es sich um metallische Hohlstangen, beispielsweise Aluminiumstangen. Zusätzlich erkennt man noch eine Handhabe 6. Die Handhabe 6 ist als U-förmiger Rohrbügel ausgelegt. In diesem Fall kommt ebenfalls ein metallisches Hohlrohr zum Einsatz, beispielsweise aus Aluminium. Die Handhabe 6 ist drehbar an ein Ende der beiden Längsrandstangen 2 angeschlossen. Tatsächlich kann die Handhabe 6 um eine Querachse 7 der Basis 1 verschwenkt werden, wie dies ein Doppelpfeil in der Fig. 1 andeutet.

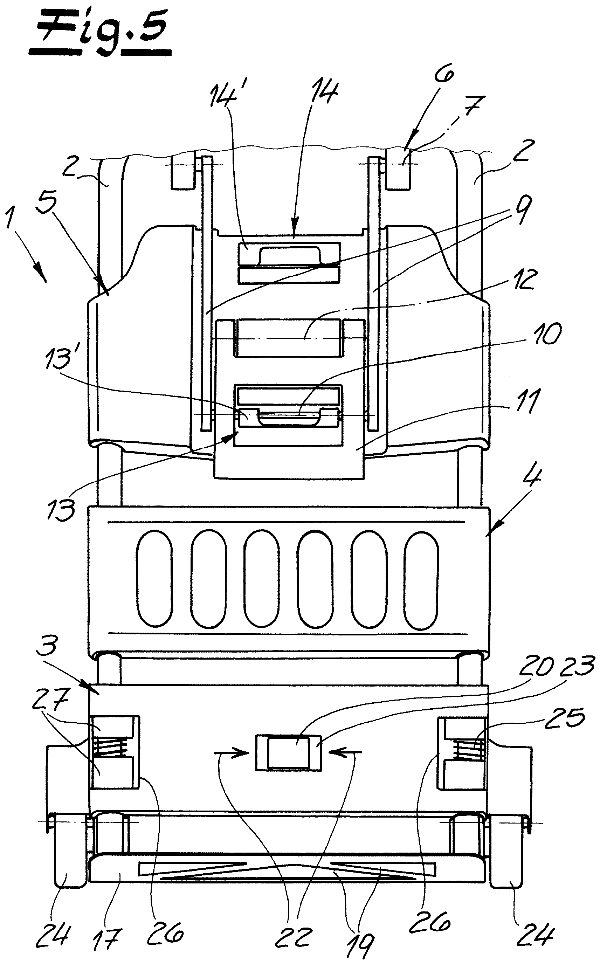

Die U-förmige Handhabe 6 weist an ihrem einen Ende einen Griff 8 für einen Bediener auf. Am anderen Ende der Handhabe 6 sind zwei Schubstangen 9 gelenkig angeschlossen, die über eine Querstange 10 miteinander verbunden sind. Tatsächlich durchgreift die die beiden Schubstangen 9 miteinander koppelnde Querstange 10 eine Längsführung in einem Handgriff 11, wie insbesondere die Figur 5 deutlich macht. Der Handgriff 11 kann um eine Achse 12 gegenüber dem ihn tragenden Führungsquerträger 5 verschwenkt werden. Dadurch kann der Handgriff 11 einerseits die zur Sackkarrenstellung in den Fig. 2 und 5 dargestellte Position und andererseits die zur Transportstellung in der Fig. 1 und auch zur Vorratsstellung bzw. zur zusammengefalteten Position in der Fig. 3 dargestellte Position einnehmen. Zum Wechsel zwischen den beiden Positionen wird der Handgriff 11 um seine Achse 12 verschwenkt.

Dadurch wird die die beiden Schubstangen 9 miteinander verbindende Querstange 10 in die zur Sackkarrenposition gehörige erste Rastung 13 und auch in die zweite Rastung 14 überführt, welche zur Transportstellung und Vorratsstellung gehört. Beide Rastungen 13, 14 sind jeweils so ausgelegt, dass sie die Querstange 10 lösbar festhalten. Um die Rastung 13 bzw. 14 zu lösen, muss lediglich ein jeweiliges Rastelement 13' bzw. 14' beaufschlagt werden. Als Folge hiervon kann die Handhabe 6 eine winklige und insbesondere rechtwinklige Anordnung im Vergleich zur Basis 1 einnehmen, wie sie zur Transportstellung gemäß der Fig. 1 gehört. Ebenso lässt sich die Handhabe 6 in Richtung der Basis 1 ausstrecken und in die Sackkarrenstellung gemäß der Fig. 2 überführen.

Zur erstgenannten Transportstellung in der Fig. 1 gehört die zweite Rastung 14, während in der Sackkarrenstellung nach der Fig. 2 die Querstange 10 in der ersten Rastung 13 gehalten wird. Ausgehend von der Transportstellung in der Fig. 1 kann die Handhabe 6 an die Basis 1 angeklappt werden. Bei diesem Vorgang verbleibt die Querstange 10 in der zweiten Rastung 14 und werden lediglich die Schubstangen 9 um die als Drehachse fungierende und in der zweiten Rastung 14 fixierte Querstange 10 verschwenkt, wie man beim Übergang von der Fig. 1 zur Fig. 3 nachvollziehen kann. Der jeweiligen Bewegung der Handhabe 6 folgen dabei endseitig an die Handhabe 6 angeschlossene Lenkrollen 15. Die Lenkrollen 15 werden von einer Querstange 16 getragen. Dabei ist die Auslegung so getroffen, dass die Lenkrollen 15 in der Transportstellung nach der Fig. 1 um eine vertikale Achse verschwenkt werden können, so dass mit ihrer Hilfe der in der Transportstellung nach der Fig. 1 befindliche Transportwagen gelenkt werden kann. Dazu ergreift ein Bediener den Griff 8 und kann auf diese Weise auf der Basis 1 befindliche Güter hin und her bewegen.

In den Figuren erkennt man zusätzlich noch eine Bodenplatte 17, welche endseitig an die beiden Längsrandstangen 2 angeschlossen ist. Die Bodenplatte 17 lässt sich um eine quer verlaufende Achse 18 verschwenken, und zwar zwischen einer abgeklappten und in der Fig. 1 dargestellten Position und einer angeklappten Stellung gemäß der Fig. 3.

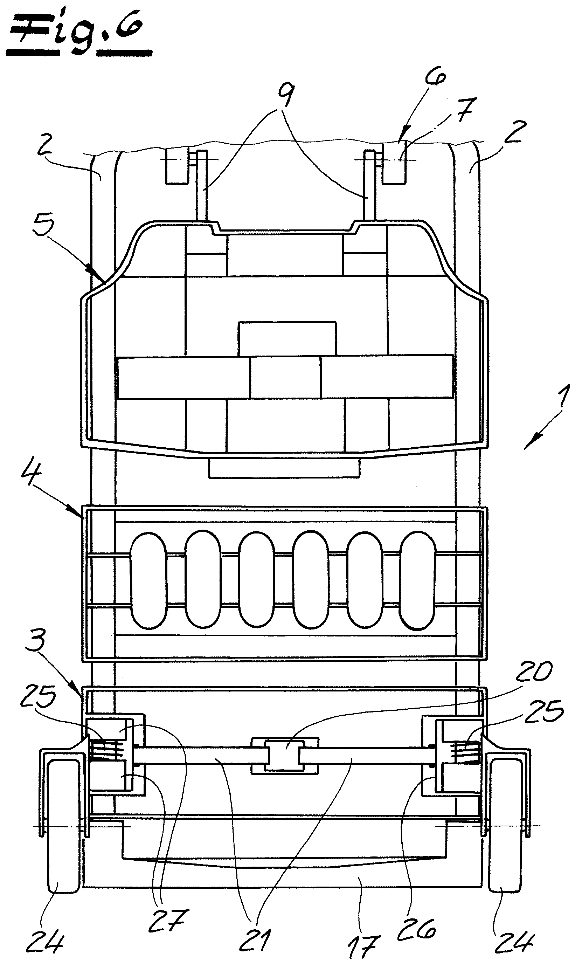

Die fragliche Bodenplatte 17 ist mit Ausnehmungen 19 ausgerüstet, welche auch in ihrer angeklappten und in der in Fig. 3 dargestellten Position eine Beaufschlagung eines dortigen Betätigungsknopfes 20 ermöglichen. Der Betätigungsknopf 20 gehört insgesamt zu einem Betätigungselement 20, 21, welches man am besten in der Rückansicht nach der Fig. 6 erkennt. Tatsächlich setzt sich das Betätigungselement 20, 21 aus dem bereits angesprochenen Betätigungsknopf 20 und an den Betätigungsknopf 20 beidseitig angeschlossenen Auslegern 21 zusammen. Man erkennt, dass zwei in Querrichtung der Basis 1 orientierte Ausleger 21 vorgesehen sind, die jeweils von dem Betätigungsknopf 20 beaufschlagt werden.

Tatsächlich lässt sich der Betätigungsknopf 20 in der fraglichen Querrichtung hin und her bewegen, wie zwei in der Fig. 5 dargestellte Betätigungspfeile 22 andeuten. Die Betätigungspfeile 22 sind in dem Transportquerträger 3 bzw. an dessen Oberseite vorgesehen. Außerdem ist die Auslegung insgesamt so getroffen, dass das Betätigungselement 20, 21 bis auf den Betätigungsknopf 20 oberseitig von dem fraglichen Transportquerträger 3 abgedeckt wird. Das heißt, die Ausleger 21 finden sich ausweislich der Fig. 6 an der Unterseite des fraglichen Transportquerträgers 3 geschützt vor etwaigen auf der Basis 1 befindlichen Ladungen. Der Betätigungsknopf 20 ist in eine oberseitige Ausnehmung 23 des Transportquerträgers 3 eingelassen. Dadurch kann eine unbeabsichtigte Beaufschlagung des Betätigungsknopfes 20 durch beispielsweise auf der Basis 1 befindliche Ladung ausgeschlossen werden. Vielmehr lässt sich der Betätigungsknopf 20 ausschließlich in der Querrichtung beaufschlagen, wie dies die Betätigungspfeile 22 andeuten.

Die Basis 1 ist mit einem angeschlossenen Räderpaar 24 ausgerüstet. Das Räderpaar 24 bzw. die zugehörigen Räder 24 lassen sich an die Basis 1 anklappen, wie dies in der Vorratsstellung bzw. der zusammengefalteten Position nach der Fig. 3 gezeigt ist. Darüber hinaus können die Räder 24 abgeklappt werden, wie dies die Transportstellung nach der Fig. 1 oder auch die Sackkarrenstellung entsprechend der Fig. 2 darstellt. Zu diesem Zweck sind die beiden Räder 24 mit Hilfe von Federelementen 25 in Richtung ihrer angeklappten Stellung vorgespannt. Das heißt, die Räder 24 sind jeweils um eine Basislängsachse L verschwenkbar, die man insbesondere in der Figur 4 erkennt.

Bei den Federelementen 25 handelt es sich jeweils um Spiralfedern, welche die Längsrandstangen 2 wendelförmig umgeben und für die erforderliche Vorspannung der Räder 24 in Richtung ihrer angeklappten Stellung sorgen. Damit die Räder 24 ihre abgeklappte Position beibehalten, sind nicht ausdrücklich dargestellte Rastmittel endseitig der Ausleger 21 und Gegenrastmittel an den Rädern 24 vorgesehen. Durch die Wechselwirkung der Rastmittel und Gegenrastmittel werden die Räder 24 in ihrer abgeklappten Position im Vergleich zu der Basis 1 gehalten, so lange der Betätigungsknopf 20 nicht in der einen oder der anderen Querrichtung beaufschlagt wird.

Sobald der Betätigungsknopf 20 in einer Betätigungsrichtung entsprechend dem zugehörigen Betätigungspfeil 22 in Querrichtung beaufschlagt wird, führt dies dazu, dass sich der Ausleger 21 von dem zugehörigen abgeklappten Rad 24 entfernt. Als Folge hiervon wird die Wechselwirkung zwischen den Rastmitteln endseitig des Auslegers 21 und den Gegenrastmitteln am Rad 24 aufgehoben. Dadurch kann das Rad 24 unterstützt durch das zugehörige Federelement 25 an die Basis 1 angeklappt werden.

Für den Übergang von der angeklappten Position des betreffenden Rades 24 in die abgeklappte Stellung ist es lediglich erforderlich, dass ein Bediener unter Überwindung der durch die Federelemente 25 aufgebauten Federkraft das betreffende Rad 24 beaufschlagt. Die Räder 24 sind jeweils um die in der Fig. 4 eingezeichnete Basislängsachse L verschwenkbar. Tatsächlich definieren die beiden Längsrandstangen 2 zugehörige Basislängsachsen L, um welche die fraglichen Räder 24 verschwenkt werden können. Dazu sind die betreffenden Räder 24 jeweils drehbar an die Längsrandstangen 2 angeschlossen.

Man erkennt, dass der Transportquerträger 3 jeweils mit Ausnehmungen 26 randseitig ausgerüstet ist. Die randseitigen Ausnehmungen 26 des Transportquerträgers 3 sorgen dafür, dass korrespondierende Drehlager 27 der Räder 24 in den Ausnehmungen 26 ebenso wie die als Spiralfedern ausgebildeten Federelemente 25 hierin Platz finden.

Der Transportquerträger 3 verbindet die beiden Längsrandstangen 2 im Bereich der Bodenplatte 17. Außerdem ist die Auslegung so getroffen, dass die Bodenplatte 17 den Transportquerträger 3 in zusammengefaltetem Zustand abdeckt, wie es die Fig. 3 andeutet. Zugleich sorgen die Ausnehmungen 19 in der Bodenplatte 17 dafür, dass in diesem zusammengefalteten Zustand unverändert der Betätigungsknopf 20 für eine eventuelle Beaufschlagung zugänglich ist.

Die beiden Rastungen 13, 14 definieren in Verbindung mit dem Handgriff 11 insgesamt eine Führungs- und Verriegelungseinrichtung 11, 12, 13, 14 für die Handhabe 6 bzw. die Querstrebe 10, welche die endseitig gelenkig an die Handhabe 6 angeschlossenen Schubstangen 9 miteinander verbindet.

## Patentansprüche

1. Zusammenfaltbarer Transportwagen, mit einer Basis (1), ferner mit zumindest einem an die Basis (1) angeschlossenen Räderpaar (24), welches mit an die Basis (1) an- und hiervon abklappbaren Rädern (24) ausgerüstet ist, und mit einer Handhabe (6), welche wenigstens in eine an die Basis (1) angeklappte Vorratsstellung, in eine winklig zur Basis (1) angeordnete Transportstellung und in eine in Richtung der Basis (1) ausgestreckte Sackkarrenstellung überführbar ist, **dadurch gekennzeichnet, dass**
- ein von der Handhabe (6) funktional unabhängiges Betätigungselement (20, 21) zum An-/Abklappen der Räder (24) vorgesehen ist, wobei
- das Betätigungselement (20, 21) an eine zwei beabstandete Längsrandstangen (2) der Basis (1) miteinander koppelnde Querstrebe (3) angeschlossen ist, und wobei
- die Querstrebe (3) als das Betätigungselement (20, 21) bis auf einen Betätigungsknopf (20) oberseitig abdeckender Transportquerträger (3) ausgebildet ist.

2. Zusammenfaltbarer Transportwagen nach Anspruch 1, **dadurch gekennzeichnet, dass** die Räder (24) mit jeweiligen Federelementen (25) ausgerüstet sind, welche für eine Vorspannung in Richtung ihrer angeklappten Stellung sorgen.

3. Zusammenfaltbarer Transportwagen nach Anspruch 1 oder 2, **dadurch gekennzeichnet, dass** das Betätigungselement (20, 21) mit zwei von dem Betätigungsknopf (20) beaufschlagbaren Auslegern (21) ausgerüstet ist.

4. Zusammenfaltbarer Transportwagen nach Anspruch 3, **dadurch gekennzeichnet, dass** die Ausleger (21) mit vorzugsweise endseitigen Rastmitteln ausgerüstet sind, die mit Gegenrastmitteln an den Rädern (24) wechselwirken.

5. Zusammenfaltbarer Transportwagen nach einem der Ansprüche 1 bis 4, **dadurch gekennzeichnet, dass** die Räder (24) um jeweils eine Basislängsachse (L) verschwenkbar sind.

6. Zusammenfaltbarer Transportwagen nach einem der Ansprüche 1 bis 5, **dadurch gekennzeichnet, dass** die Räder (24) jeweils an den Längsrandstangen (2) der Basis (1) drehbar angeschlossen sind.

7. Zusammenfaltbarer Transportwagen nach einem der Ansprüche 1 bis 6, **dadurch gekennzeichnet, dass** der Betätigungsknopf (20) in eine oberseitige Ausnehmung (23) des Transportquerträgers (3) eingelassen ist.

8. Zusammenfaltbarer Transportwagen nach einem der Ansprüche 1 bis 7, **dadurch gekennzeichnet, dass** der Transportquerträger (3) mit randseitigen Ausnehmungen (26) für Drehlager (27) der Räder (24) ausgerüstet ist.

9. Zusammenfaltbarer Transportwagen nach einem der Ansprüche 1 bis 8, **dadurch gekennzeichnet, dass** die beiden Längsrandstangen (2) an ihrem einen Ende durch eine schwenkbare Bodenplatte (17) und an ihrem anderen Ende durch die Handhabe (6) miteinander gekoppelt sind.

10. Zusammenfaltbarer Transportwagen nach Anspruch 9, **dadurch gekennzeichnet, dass** der Transportquerträger (3) die beiden Längsrandstangen (2) im Bereich der Bodenplatte (17) miteinander verbindet, wobei die Bodenplatte (17) den Transportquerträger (3) in zusammengefaltetem Zustand abdeckt.

11. Zusammenfaltbarer Transportwagen nach einem der Ansprüche 9 oder 10, **dadurch gekennzeichnet, dass** die Bodenplatte (17) mit Ausnehmungen (19) ausgerüstet ist, welche den Betätigungsknopf (20) in zusammengefaltetem Zustand freilassen.

12. Zusammenfaltbarer Transportwagen nach einem der Ansprüche 1 bis 11, **dadurch gekennzeichnet, dass** zusätzlich zu dem Transportquerträger (3) zumindest noch ein Führungsquerträger (5) für die Handhabe (6) vorgesehen ist, welcher die beiden Längsrandstangen (2) der Basis (1) miteinander verbindet.

13. Zusammenfaltbarer Transportwagen nach Anspruch 12, **dadurch gekennzeichnet, dass** der Führungsquerträger (5) mit einer Führungs- und Verriegelungseinrichtung (11, 12, 13, 14) für die Handhabe (6) ausgerüstet ist.

## Claims

1. Collapsible transporting trolley with a base (1), also with at least one wheel pair (24) connected to the base (1) which is fitted with wheels (24) which can be folded towards and away from the base (1) and with a handle (6) which can be moved into at least one storage position folded against the base (1), a transporting position arranged at an angle to the base (1) and into an extended handcart position in the direction of the base (1) **characterised in that**
- an operating element (20, 21) functionally independent of the handle (6) for folding the wheels (24) in or out is provided, wherein
- the operating element (20, 21) is connected to a cross member (3) connecting two longitudinal edge rods (2) of the base (1) to each other and wherein
- the cross member (3) is designed as a transporting cross member (3) covering the operating element (20, 21) except for an operating button (20) on the upper side.

2. Collapsible transporting trolley according to claim 1 **characterised in that** the wheels (24) are equipped with respective spring elements (25) which ensure pre-tensioning in the direction of their folded in position.

3. Collapsible transporting trolley according to claim 1 or 2 **characterised in that** the operating element (20, 21) is fitted with two side arms (21) which can be actuated by the operating button (20).

4. Collapsible transporting trolley according to claim 3 **characterised in that** the side arms (21) are equipped with preferably end-side locking means which interact with counter-locking means on the wheels (24).

5. Collapsible transporting trolley according to any one of claims 1 to 4 **characterised in that** wheels (24) can respectively be pivoted about a longitudinal axis of (L) of the base.

6. Collapsible transporting trolley according to any one of claims 1 to 5 **characterised in that** the wheels (24) are each rotatably connected to the longitudinal edge rods (2) of the base (1).

7. Collapsible transporting trolley according to any one of claims 1 to 6 **characterised in that** the operating button (20) is sunk into a recess (23) on the upper side of the transporting cross member (3).

8. Collapsible transporting trolley according to any one of claims 1 to 7 **characterised in that** the transporting cross member (3) is equipped at the edge with recesses (26) for pivot bearings (27) of the wheels (24).

9. Collapsible transporting trolley according to any one of claims 1 to 8 **characterised in that** both longitudinal edge rods (2) are at one of their ends connected to each other by a pivotable base plate (17) and at their other end by the handle (6).

10. Collapsible transporting trolley according to claim 9 **characterised in that** the transporting cross member (3) connects the two longitudinal edge struts (2) to each other in the area of the base plate (17), wherein in the collapsed state the base plate (17) covers the transporting cross member (3).

11. Collapsible transporting trolley according to any one of claims 9 or 10, **characterised in that** the base plate (17) is equipped with recesses (19) which in the collapsed state leave the operating button (20) free.

12. Collapsible transporting trolley according to any one of claims 1 to 11, **characterised in that** in addition to the transporting cross member (3) at least one further guiding cross member (5) for the handle (6) is provided which connects the two longitudinal edge rods (2) of the base (1) to each other.

13. Collapsible transporting trolley according to claim 12 **characterised in that** the guiding cross member (5) is equipped with a guiding and locking device (11, 12, 13, 14) for the handle (6).

## Revendications

1. Chariot de transport pliant, avec une base (1), par ailleurs, avec au moins une paire de roues (24) rattachée sur la base (1), laquelle est équipée de roues (24) rabattables contre et à partir de la base (1) et avec une manette (6), laquelle peut être amenée au moins dans une position de réserve rabattue contre la base (1), dans une position de transport placée angulairement par rapport à la base (1) et dans une position de diable étendue en direction de la base (1), **caractérisé en ce**
- **qu'**un élément de manoeuvre (20, 21) fonctionnellement indépendant de la manette (6) est prévu pour rabattre/déployer les roues (24),
- **que** l'élément de manoeuvre (20, 21) est raccordé sur une entretoise (3) accouplant l'une à l'autre deux barres de bord longitudinal (2) écartées de la base (1), et
- **que** l'entretoise (3) est conçue en tant qu'une traverse de transport (3) recouvrant sur la face supérieure l'élément de manoeuvre (20, 21), à part un bouton de manoeuvre (20).

2. Chariot de transport pliant selon la revendication 1, **caractérisé en ce que** les roues (24) sont équipées d'éléments à ressort (25) respectifs, lesquels assurent une précontrainte dans la direction de leur position rabattue.

3. Chariot de transport pliant selon la revendication 1 ou 2, **caractérisé en ce que** l'élément de manoeuvre (20, 21) est équipé de deux flèches (21) pouvant être soumises au bouton de manoeuvre (20).

4. Chariot de transport pliant selon la revendication 3, **caractérisé en ce que** les flèches (21) sont équipées de moyens d'enclenchement de préférence d'extrémité qui interagissent avec des moyens d'enclenchement antagonistes sur les roues (24).

5. Chariot de transport pliant selon l'une quelconque des revendications 1 à 4, **caractérisé en ce que** les roues (24) sont susceptibles de pivoter autour de respectivement un axe longitudinal (L) de la base.

6. Chariot de transport pliant selon l'une quelconque des revendications 1 à 5, **caractérisé en ce que** les roues (24) sont respectivement rattachées en rotation aux barres de bord longitudinal (2) de la base (1).

7. Chariot de transport pliant selon l'une quelconque des revendications 1 à 6, **caractérisé en ce que** le bouton de manoeuvre (20) est enchâssé dans un évidement (23) sur la face supérieure de la traverse de transport (3).

8. Chariot de transport pliant selon l'une quelconque des revendications 1 à 7, **caractérisé en ce que** la traverse de transport (3) est équipée d'évidements (26) de bordure pour des coussinets de pivotement (27) des roues (24).

9. Chariot de transport pliant selon l'une quelconque des revendications 1 à 8, **caractérisé en ce que** sur l'une de leurs extrémités, les deux barres de bord longitudinal (2) sont accouplées l'une à l'autre par une plaque d'embase (17) pivotante et sur leur autre extrémité par la manette (6).

10. Chariot de transport pliant selon la revendication 9, **caractérisé en ce que** la traverse de transport (3) relie l'une à l'autre les deux barres de bord longitudinal (2) dans la région de la plaque d'embase (17), la plaque d'embase (17) recouvrant la traverse de transport (3) dans la position pliée.

11. Chariot de transport pliant selon l'une quelconque des revendications 9 ou 10, **caractérisé en ce que** la plaque d'embase (17) est équipée d'évidements (19), lesquels libèrent le bouton de manoeuvre (20) dans la position pliée.

12. Chariot de transport pliant selon l'une quelconque des revendications 1 à 11, **caractérisé en ce qu'**en supplément de la traverse de transport (3), il est prévu au moins encore une traverse de guidage (5) pour la manette (6), laquelle relie l'une à l'autre les deux barres de bord longitudinal (2) de la base (1).

13. Chariot de transport pliant selon la revendication 12, **caractérisé en ce que** la traverse de guidage (5) est équipée d'un système de guidage et de verrouillage (11, 12, 13, 14) pour la manette (6).
